# EUROPEAN PATENT SPECIFICATION

(11) **EP 0 557 358 B1**
(45) Date of publication and mention of the grant of the patent: **17.07.1996**
(21) Application number: 91920020.4
(22) Date of filing: 26.11.1991
(51) Int. Cl.: E04B 1/80, E04C 2/54, E04D 3/06

(54) **TRANSLUCENT THERMAL INSULATION**
LICHTDURCHLAESSIGE WAERMEISOLIERUNG
ISOLATION THERMIQUE TRANSLUCIDE

(30) Priority: 27.11.1990 FI 905834
(43) Date of publication of application: 01.09.1993
(73) Proprietor: E.I. DU PONT DE NEMOURS & COMPANY INCORPORATED, Wilmington Delaware 19898 (US)
(72) Inventor: RAUNIO, Pentti, SF-11120 Riihimäki (FI)
(74) Representative: Jones, Alan John
(86) International application number: FI9100352
(87) International publication number: WO9209760

(56) References cited:
- EP-A- 0 353 397
- DE-A- 2 906 259

## Description

The present invention relates to a light or other radiation transmitting fibrous thermal insulation which comprises at least one coating layer of transparent and/or translucent material, such as glass, plastics, plastics composite or some combination of these, and an insulating layer attached to the coating layer or inserted between the coating layers.

Translucent thermal insulations may comprise, e.g., multiple coatings or a combination of coatings and insulating material inserted therebetween. For example, glass or plastics are used as coatings. As translucent insulating materials are used, for example, different silicon gels or the like and different materials treated with blowing agents, for example, urea formaldehyde, phenol formaldehyde, polycarbonate, polystyrene, polystyrene copolymer or polyethylene. Prior art arrangements are disclosed, e.g., in DE patents 29 06 259, 23 14 622, 32 14 421 and in EP patent 353 397. Typical to earlier known structures is that their manufacturing costs are high and that their utility is poor in practice, and often they are not aesthetic in appearance.

A translucent thermal insulation in which glass fibers are used as a heat insulator is known per se. A paper, "Optimization of transparently covered fibrous insulation", was read on this subject in the "2nd International Workshop of Transparent Insulation" conference, held on March 24 to 28, 1988 in Freiburg, West Germany. It described passive use of solar energy in heating of houses. A glass pane as transparent cover and a low-density fibrous layer reflecting only little light are installed on a blackened house wall. Some of the solar radiation energy is transmitted through the insulation, heating the wall surface. According to the calculation made in this paper, an optimum composition of the above described thermal insulation is: a 50 mm thick insulating layer, consisting of weakly light scattering and weakly heat absorbing fibers with a diameter of about 20 to 30 µm and density of 10 kg/m³ and of non-coated glass pane as a cover. Thus, light transmission is mainly effected through the glass material of the fibers.

The object of the present invention is to provide a thermal insulation with a high thermal insulation capacity, sufficient light transmissivity, and aesthetic appearance and which consists of at least one coating layer and an insulating layer with or between the coating layers. The coating layer may be of glass, plastics, plastics composite or some combination of these. An arrangement according to the invention may be utilized in wall and roof structures, roof hatches of cars, dormers, other windows, doors, and as prefabricated elements of light wells, outdoor sheds, stairways, greenhouses, spas, swimming pools etc.

The object of the invention is achieved with a thermal insulation having a characteristic feature of being formed of thin fibers with an average diameter less than 12 µm, such that the fibers principally scatter light and thermal radiation by reflection at the external surface of the fibers rather than by internal reflection within the fibers.

The insulating layer of the translucent thermal insulation according to the invention comprises thin fibers, especially glass fibers, produced by methods known per se, and it is characteristic to these fibers that, when the fiber diameter is reduced, the share of light and other radiation transmitted through the structure of the same thickness and density does not significantly decrease, although the thermal conductivity of the insulation, measured with standard methods, is considerably reduced. Thus, the thermal insulation according to the inventon has an excellent thermal insulation capacity. It also has an expedient light transmission capacity which depends especially on the thickness and density of the fiber layer. In embodiments of the invention, for example, fibers made of glass are less than 12 µm, preferably less than 4 µm, in diameter, and the bulk density of the glass fibers is typically less than 50 kg/m³, preferably 2 to 20 kg/m³.

As mentioned in the paper above, light is transmitted, e.g., through a weakly light scattering fiber layer, which is comprised of fibers with a diameter of about 20 to 30 µm, mainly through the glass material of the fibers. When the fiber thickness decreases, the light scattering area of the structure increases. Luminous and other radiation transmitted through the insulating layer most obviously proceeds in this kind of matting or like structure formed by thin fibers mainly in the gaps between the fibers, by being reflected from the fiber surfaces. When the fiber thickness is reduced, the share of direct light transmitted through the fibers decreases. This phenomenon can be visualized by looking at rather thick fibers made of clear glass. They show as grey or dark grey. Glass fibers of clear glass and about 6 um in diameter show as white. This strong reflection of light from fibers can be seen by focusing a spotlike source of light on this kind of insulating layer and then by observing the insulation from the opposite side, whereby it can be seen that the spotlike light scatters to a large area. For example, direct sunlight shows as a white, almost uniform light when seen through a translucent, fibrous thermal insulation made of clear glass according to the invention. The translucent insulation of the invention, comprising, e.g., matting of thin fibers + coating layers of glass panes, also has excellent back-reflecting properties. Thus, it does not strongly absorb heat energy, but reflects it back. Advantages of high back-reflecting of heat and other radiation are described later in connection with example No. 2.

Fibers may also be treated with different coating materials, e.g, for increasing reflection. Besides glass fibers, the insulating layer according to the invention may also be made of other fibers, such as slag, mineral or polymeric fibers, which have the above-described properties. The insulating layer may also contain additives or fillers, such as microspheres or special fibers. These additives or fillers may be treated in many different ways. For example, they may blacken by the effect of sunlight, in other words, they may be photochromatic.

Nowadays, fibers belonging to the above-identified material groups are used as conventional heat and sound insulations in the range of 12 to 4 pm in fiber diameter and for various air and liquid filters in the range of 4 to 0.5 µm in fiber diameter.

The thermal insulation according to the invention may comprise one or more coating layers with the insulating layer, comprised of thin fibers, being attached to the coating layer or brought inbetween the coating layers. The coating layers/coating layer both support/supports the heat insulating layer and protect/protects it against external conditions such as weather, dust, general fouling etc. The outer or the inner surface of the outermost coating layer may also be provided with different sheets for adjusting or improving the thermal insulation or translucence properties of the structure. If two coating layers are used, insulation properties may be improved by arranging the fibrous insulating layer with a partial vacuum or by filling it with gas, e.g., with so-called greenhouse gas.

The insulation of the invention transmitting both light and heat radiation will be described in greater detail in the following, by way of example, with reference to the accompanying schematic cross sectional views and figures of test arrangements of and results from example 2, in which
- Fig. 1: is a schematic, partial cross-sectional view of a translucent thermal insulation comprising two coating layers,
- Fig. 2: is a schematic, partial cross-sectional view of a preferred embodiment of the invention,
- Fig. 3: illustrates a test arrangement in accordance with example 2, and
- Fig. 4: is a graph of the results from the tests according to Fig. 3.

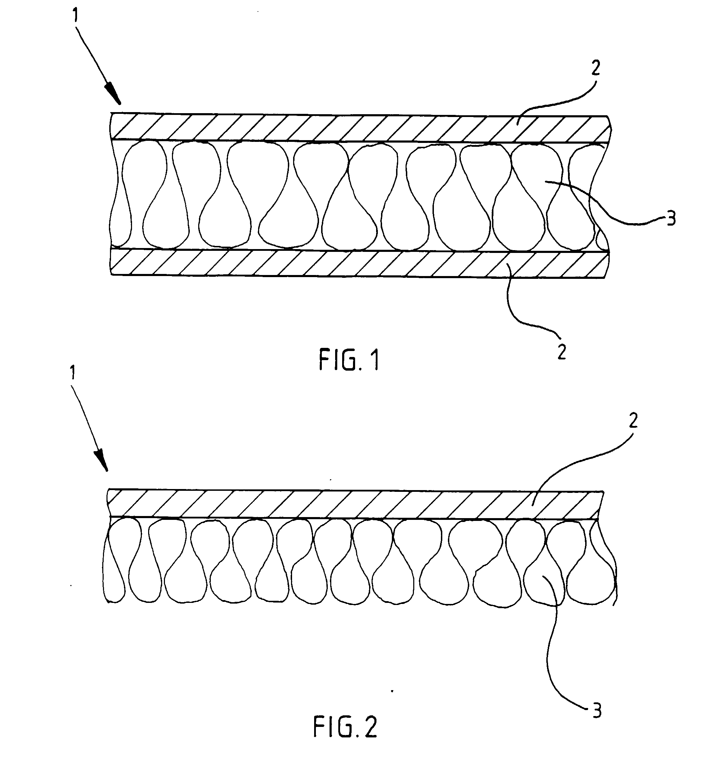

In accordance with Fig. 1, a thermal insulation layer/sheet/panel transmitting both light and heat radiation comprises one or more coating layers 2 and an insulating layer 3, which may be provided as matting, wadding or flocculated blast material. With the blast method, flocculated fibers may be brought, e.g., onto the surface of one coating layer only and then the structure closed with another coating layer on the thus formed fiber layer. In the manufacture of insulation matting or flocculated blast products, binders and/or needling as used in prior art processes may also be utilized in order to provide the desired mechanical properties. Due to the above-described simple manufacturing methods, the manufacture of translucent thermal insulations according to the invention is clearly less expensive and easier in comparison with the alternatives on the market, and no expensive investments are required.

Fig. 2 illustrates a preferred embodiment of the invention, which is provided with one coating layer 2 only.

The insulating layer 3 manufactured by the above-described methods is aesthetic in appearance and, for example, in light roofing applications, it may well be completely in sight. The aesthetic impression may be further added by applying various, e.g., coloured fibers among the light and other radiation transmitting insulating layer, or the insulating layer or part thereof may be stained or dyed. In building surfaces, transparent, directly light transmitting parts may also be used. Such composite structures may be applied, for example, in swimming pools and spas.

In the arrangement according to the invention, the light and other radiation transmitted through the thermal insulation may be regulated by adjusting the thickness and density of the insulating layer. Raw materials, which are light in colour and highly reflecting as to light and other radiation may be advantageously selected for the manufacture of the insulation fibers. The fibers may also be coated for optimizing their reflective properties. By applying a suitable coating material either on the outer or the inner surface of the coating layer, it is possible to adjust the reflective properties of the coating layer.

The empty space between the fibers between the coating layers 2 may be dimensioned by adjusting the bulk density and fiber thickness of the fiber layer. The fiber layers may also be so arranged that, at least one coating layer is provided with a fiber layer, whereby a space can be left between the coating layers in which there are substantially no fibers. For example, two arrangements according to Fig. 2 may be placed one on top of the other so that the insulating layers are arranged one against the other, whereby a free space dimensioned by a frame of suitable width, may be left between the insulating layers. To improve insulation properties of the insulating layer, the free space between the coating layers according to the example, i.e., the volume between single fibers + a separate free space may be provided with partial vacuum or it may be filled with gas, e.g., so-called greenhouse gas, as mentioned earlier.

Thin fibers may be bound together with binding fibers, or without a binder, for example, by needling, or they may be treated with a binder which produces a light, nearly white matting. For example, light derived from a spotlike source of light scatters extensively when it passes through the fiber matting, and it can be seen on the other side of the matting as a light area, not as a light spot. As mentioned earlier, referring to Fig. 2, fibers may also be used like blast wool, i.e., a suitable layer thereof may be brought in between the coating layers 2.

The thermal insulation according to the invention is especially advantageous, for example, in greenhouses, where single glazing is extensively used nowadays. Part of greenhouse cultivation is started early in spring when the nights are long and the quantity of sunlight varies in the daytime. In those conditions, a lot of heating energy is consumed with existing structures. The arrangement according to the invention saves a lot of heating energy, which is the greatest cost factor in greenhouse cultivation. The thermal insulation according to the invention also equalizes temperatures during the hot summer time, acting to reduce heat transmission to the interior when the sun shines and gives too much heat. The arrangement of the invention is also applicable to, e.g., swimming pools and other buildings with large windows. Like in greenhouses, large amounts in heating costs can be saved by replacing, for example, part of the window area by thermal insulations according to the invention. The lighting effect coming from the outside does not suffer much, but the heating costs are considerably reduced due to a highly improved thermal insulation. The advantages of the invention over the alternatives now on the market are brought out in structures of this kind. The following Example 2 clearly shows the significant technical as well as aesthetic advantages of the invention over the known arrangements.

When coating layers 2 and insulating layer 3 which contains short fibers are combined in any of the above-described methods, the result is a thermal insulation which is appropriately translucent and has an especially high thermal insulation capacity with respect to its translucence. Being light, it is aesthetic in appearance, and it is also inexpensive. Such thermal insulations may be used, as mentioned earlier, for example, in windows and doors as well as building elements of light wells, stairways and roofs. For example, in greenhouses or other hot conditions, the arrangement of the invention prevents excessive heating of the interior, still providing the premises with sufficient lighting. Use of the thermal insulation of the 5 invention as a building element of various buildings, sheds, outdoor warehouses, etc. offers an ideal arrangement, especially when the days are hot and the nights may be very cold.

Example 1 describes an arrangement according to the invention, in which arrangement an insulating layer was introduced between two coating layers as follows:

| | |
|---|---|
| coating layers: | 2 glass panes, pane thickness 3 mm |
| insulating material: | glass fiber |
| fiber density: | approx. 5kg/m³ |
| fiber diameter: | approx. 3µm |
| insulating layer thickness: | about 24 mm |

This arrangement gave a translucency value of about 45 % and heat transmissivity value **k** ≈ 1.3 W/m^{2o}K, which corresponds to a high quality window structure with quadruple glazing.

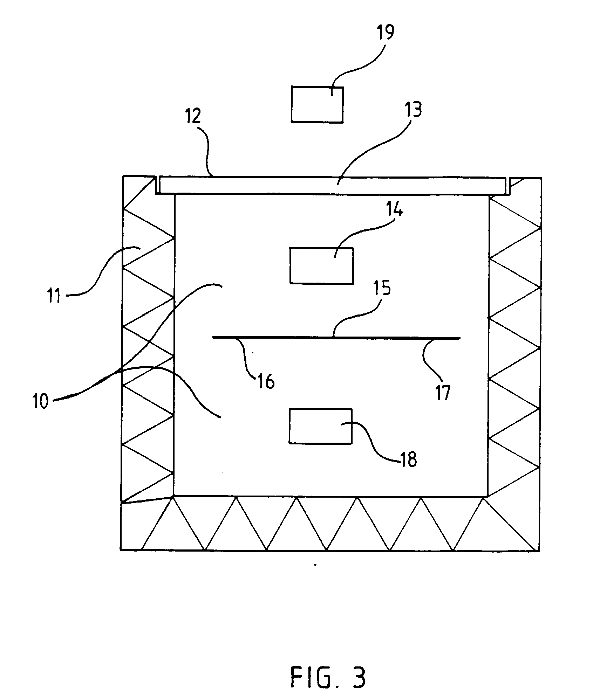

Example 2 presents properties of a thermal insulation according to the invention and compares them with an earlier known arrangement. Fig. 3 presents a test arrangement for measuring the intensity of the radiation transmitted through alternative translucent insulating layers to a well insulated space 10 as well as the temperature of this well insulated space at various measuring points. The walls 11 of the insulated space were of blown polyurethane.

A translucent insulating layer 12 in the first test was provided as a single, clear 4 mm thick glass. A translucent insulating layer in the second test was provided as a thermal insulation according to the invention, which comprised two normal, 4 mm thick, clear glass panes and an approximately 24 mm thick fiber layer therebetween, which fiber layer was glass fiber in an air atmosphere. The glass fibers were about 4 µm in diameter and the fiber density of the insulating layer was about 7 kg/m³. As a translucent insulating layer in the third test, a 4 mm thick, clear glass + 24 mm air gap + 4 mm thick, clear glass was provided. Measuring results from the third test proved insufficient for the drawing of a graph. They are, therefore, explained later in the text. Otherwise, the test arrangement itself was similar to the other two test arrangements.

A measuring point 13 is the gap between the glass panes (only with the thermal insulation according to the invention; the second test utilized a single glass pane). Below the insulating layer 12, inside the insulated space 10, is arranged an emittance sensor 14 and below it a black plate 15, the bottom surface thereof being provided with two temperature detectors 16 and 17. Below the black plate 15, in insulated space 10, is disposed a temperature detector 18. External radiation is measured with a sensor 19.

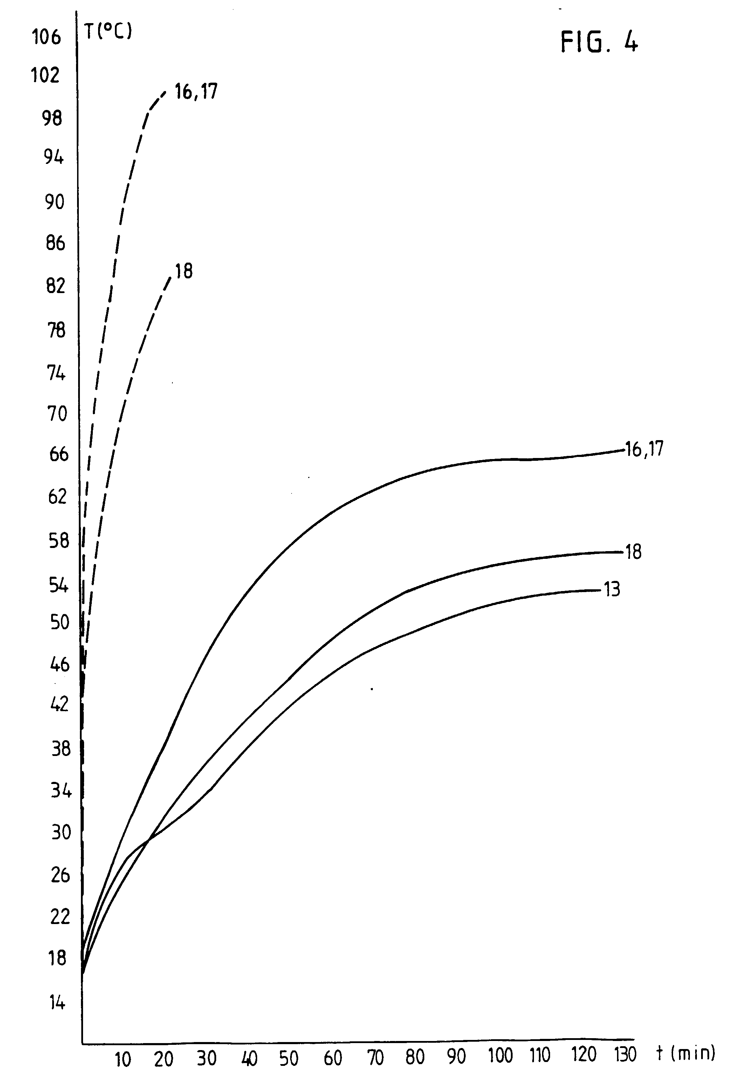

Fig. 4 presents the results of the tests performed on the basis of the test arrangements according to Fig. 3, by means of graphs drawn on temperature against time axes. The outdoor temperature was about 16°C during both tests. Test results with a single glass pane used in the first test are marked with a dashed line in Fig. 4. The test results with a thermal insulation according to the invention, used in the second test, are marked with a full line. Measuring points 13, 16, 17 and 18 mentioned in the explanation of Fig. 3 are shown at the graphs.

The outside radiation in the first test was about 850 W/m² at measuring point 19 and about 700 W/m² under the glass pane, i.e. under the insulating layer, at measuring point 14. The dashed line graphs in Fig. 4 illustrating the first test clearly indicate that the temperature at measuring points 16 and 17 on the bottom surface of the black plates rises very rapidly to a considerably high level, i.e., to about 100°C in about 20 minutes from the start of the test. The temperature at measuring point 18 also rises to a considerably high level, i.e., to about 82°C in about 20 minutes.

In the second test, the outside radiation was about 900 W/m² at measuring point 19 and about 200 W/m² under the insulating layer 12 of the invention at measuring point 14. The solid curves of Fig. 4 illustrating the second test indicate that the rate of temperature rise with the thermal insulation according to the invention is much more moderate in comparison with the first test and that the temperature measured after 120 minutes from the start of the test had only risen to about 66°C at measuring points 16 and 17. Under the black plate, at measuring point 18, the temperature is not more than about 56°C when 120 minutes have passed from the start of the test.

In the second test on the arrangement of the invention, also the back-reflecting thermal efficiency and transmitting light efficiency as well as heat transmissivity were measured. The value of the back-reflecting thermal efficiency was about 40 % and the transmitting light efficiency about 25 %. Heat transmissivity value, i.e., the so-called k-value, was **k** ≈ 1.3 W/m^{2o}K.

In the third test, a translucent thermal insulation was a 4 mm thick window glass + 24 mm air gap + 4 mm thick window glass. The outdoor temperature was the same as before, i.e., about 16°C. The efficiency of the outside radiation was about 900 W/m² and the radiation efficiency under the thermal insulation was about 650 W/m² at measuring point 14. At measuring points 16 and 17, under the black plate 15, the temperature was about 120°C when measured after 20 minutes from the start of the test.

Quite a number of different glasses are on the market, which are intended to protect from the sun and which have been made by coating window glasses with different, thin, reflecting covers. For example, a product catalogue of a well-known manufacturer presents a glass combination with the k-value which is near the k-value **k** ≈ 1.3 W/m^{2o}K received from the tests performed in connection with the present invention. This k-value was one of the very best among the alternatives presented in the brochure. The k-value of the glass combination presented in the brochure was **k** ≈ 1.4 W/m^{2o}K. The combination consisted of three glass layers with a 12 mm air gap therebetween. The glass layers were: the outermost 4 mm thick layer of solar radiation reflecting float glass with a durable and resistant surface layer + the middle layer of clear glass of 4 mm + the innermost 4 mm layer of float glass coated with selective low-emissivity layer. The transmitting light efficiency was 19 % with this combination, and the back-reflecting thermal efficiency was also 19 %. The absorption value of solar radiation was 69 % in the example of the brochure. Due to this high absorption value of solar radiation, there was a note in the brochure explaining that because this combination of glasses absorbs plenty of solar heat, the risks of thermal stresses have to be evaluated and that a tempered alternative prevents damages caused by these thermal stresses. In the example taken from the above-mentioned product catalogue, a common assumption Δ T = 15°C defines the temperature difference between the outdoor and indoor temperatures. Absorption of thermal energy in the structure does not cause too much harm because the heat flux is directed outwards from the insulating structure. If the temperature difference between the outdoor and indoor temperatures is, for example, 0°, that may cause great problems because the heat latent in the thermal insulation or sun shield is plentifully conducted into the interior and, in that case the insulation has actually changed into a radiator. Consequently, the temperature may rise to an intolerable or at least uncomfortable level, especially indoors, but also in balconies etc. The arrangement may be suitable or even excellent when the outdoor temperature is cool, e.g, in spring and autumn, but in summertime it proves to be the direct contrary of its original purpose.

In the test on the arrangement of the invention, the level of back-reflecting radiation was 40 %, which means that a great deal of the efficiency of the incoming heat radiation is reflected back. Comparison of the arrangement of the invention with the above-described commercial arrangement indicates that in the arrangement of the invention, the building element is subject to 40% - 19% = 21 % less heating efficiency than in the commercial arrangement.

The advantage of the invention, based on the above-described aspects, is appreciated from the solid curve illustrating the results from the second test at measuring point 13. At measuring point 13, the temperature between the glass panes, i.e. in the insulating layer, was measured. As can be seen from the curve illustrating the measuring point 13, the temperature in the space between the glass panes remains at even a lower level than the temperature of the insulated space 10 at different measuring points. Thus, the temperature of the space between the glass panes does not substantially rise, even though the indoor temperature has risen. This is of special advantage when the arrangement of the invention is used for large structures comprising two glass layers. By utilizing the arrangement according to the invention, damages to the structure caused by too much heating can be avoided. This kind of risk was already referred to in the description of the commercial installation. In commercial arrangements, a more expensive tempered glass has to be used for eliminating harmful effects of thermal stresses. In arrangements according to the invention, conventional glass is applicable.

In the same way as it is typical to glass wool or other fibrous insulations, it is also typical to translucent thermal insulations according to the invention that they have an excellent sound insulating capacity in comparison with structures of one or even more glasses.

Due to back-reflection, it is typical to the translucent thermal insulation of the invention that it feels comfortable, e.g., against or near bare skin. In other words, arrangements according to the invention do not feel cold or draughty unlike conventional glass surfaces. For example, when one is near a large glass element which is next to cold outdoor air, it feels unpleasantly cold when touched, for example, with hand, even if the glass element comprises several layers. Staying in the vicinity of such cold surface, e.g., in a swimsuit, emphasizes an unpleasant feeling on the skin. This is a matter of significance in swimming pools or other similar buildings when considering translucent building elements. It is an important feature of the invention that a surface where the invention is applied feels pleasant when touched or almost touched with bare skin. For the same reason, arrangements according to the invention are most suitable also in animal sheds and other corresponding places, where it is desirable to have appropriate light and to maintain the space sufficiently warm during the night and sufficiently cool in the daytime and to avoid uncomfortable coldness of the translucent surface.

The present invention, related to a thermal insulation which is light and other radiation energy transmitting and which has, with respect to this property, an excellent thermal insulation capacity, provides an aesthetic arrangement which is inexpensive as to its manufacturing costs. The arrangement of the invention with expedient translucence and impenetrability to eyes, and excellent thermal and sound insulation capabilities offers an opportunity of applying the invention to a number of different installations.

Although the above description included only few preferred embodiments of the invention, it can be applied within the inventive scope defined by the accompanying claims.

## Claims

1. A light and/or other radiation transmitting and reflecting fibrous thermal insulation (1), which combines good insulation properties against both cold and sound, good back-reflection properties of heat, solar and other radiation and has high translucency of light transforming spotlike light to uniform white light, comprising one or more coating layers (2), which are of transparent or translucent material, such as glass, plastics, plastics composite or a combination thereof and an insulating layer (3) attached to the coating layer or inserted between the coating layers, characterized in that the insulating layer is formed from thin fibers having an average diameter less than 12 µm such that the fibers principally scatter light and thermal radiation by reflection at the external surface of the fibers rather than by internal reflection within the fibers.

2. A thermal insulation (1) as claimed in claim 1, characterized in that the average thickness of the fibers is less than about 4 µm.

3. A thermal insulation (1) as claimed in claim 1 or 2, characterized in that the fibers are glass, minerals or slag fibers.

4. A thermal insulation (1) as claimed in claim 1 or 2, characterized in that the fibers are polymeric fibers.

5. A thermal insulation (1) as claimed in any of claims 1 to 4, characterized in that the fibers are coated with a material facilitating the reflection of light and thermal radiation from the fiber surfaces.

6. A thermal insulation (1) as claimed in any of claims 1 to 5, characterized in that the fiber density is less than 50 kg/m³, preferably approximately 2 to 20 kg/m³.

7. A thermal insulation (1) as claimed in any of claims 1 to 6, characterized in that the insulated space, when using more than one coating layer (2), remaining between the coating layers (2) is partially deaerated or filled with gas, such as a greenhouse gas or rare gas.

8. A thermal insulation (1) as claimed in any of claims 1 to 7, characterized in that the fibers are brought between the coating layers (2) as flocculated blast material.

9. A thermal insulation (1) as claimed in any of claims 1 to 7, characterized in that the fibers are brought between the coating layers (2) as matting or wadding.

10. Use of a thermal insulation (1) as claimed in any of the preceding claims as a so-called light roofing.

11. Use of a thermal insulation (1) as claimed in any of claims 1 to 9 in translucent parts of a greenhouse, swimming pool, or other building.

12. Use of a thermal insulation (1) as claimed in any of claims 1 to 9 as translucent sound insulation.

13. Use of a thermal insulation (1) as claimed in any of claims 1 to 9 in building elements near to human or animal body.

14. A thermally insulated light transmitting and other radiation transmitting panel (1), comprising at least one layer (2) of a translucent or transparent material and a thermal insulating layer (3) on at least one side of said translucent or transparent layer (2), characterized in that the insulating layer is formed from thin fibers having an average diameter less than 12 µm such that the fibers principally scatter light and thermal radiation by reflection at the external surface of the fibers rather than by internal reflection within the fibers.

## Patentansprüche

1. Lichtdurchlässige und/oder andere Strahlung hindurchlassende und reflektierende, faserige Wärmeisolierung (1), die in sich gute Isolierungseigenschaften sowohl gegen Kälte als auch gegen Schall und gute Rückstrahlungseigenschaften für Wärme, Sonnenstrahlung und andere Strahlung in sich vereint und eine hohe Lichtdurchlässigkeit aufweist, durch die punktartiges Licht in gleichmäßiges weißes Licht umgewandelt wird, umfassend eine oder mehrere überzugsschichten (2), die aus transparentem oder lichtdurchlässigem Material sind, wie z. B. aus Glas, Kunststoff, Kunststoffverbund oder einer Kombination derselben, sowie eine Isolierungsschicht (3), die auf der Überzugsschicht befestigt oder zwischen den Überzugsschichten eingefügt ist, dadurch gekennzeichnet, daß die Isolierungsschicht aus dünnen Fasern mit einem durchschnittlichen Durchmesser von weniger als 12 µm ausgebildet ist, so daß die Fasern grundsätzlich Licht- und Wärmestrahlung durch Reflexion an der Außenfläche der Fasern und nicht durch innere Reflexion in den Fasern streuen.

2. Wärmeisolierung (1) nach Anspruch 1, dadurch gekennzeichnet, daß die durchschnittliche Dicke der Fasern weniger als etwa 4 µm beträgt.

3. Wärmeisolierung (1) nach Anspruch 1 oder 2, dadurch gekennzeichnet, daß die Fasern Glas-, Mineral- oder Schlackenfasern sind.

4. Wärmeisolierung (1) nach Anspruch 1 oder 2, dadurch gekennzeichnet, daß die Fasern Polymerfasern sind.

5. Wärmeisolierung (1) nach einem beliebigen der Ansprüche 1 bis 4, dadurch gekennzeichnet, daß die Fasern mit einem Material beschichtet sind, das die Reflexion von Licht- und Wärmestrahlung von der Oberfläche der Fasern erleichtert.

6. Wärmeisolierung (1) nach einem beliebigen der Ansprüche 1 bis 5, dadurch gekennzeichnet, daß die Faserdichte weniger als 50 kg/m³, vorzugsweise annähernd 2 bis 20 kg/m³ beträgt.

7. Wärmeisolierung (1) nach einem beliebigen der Ansprüche 1 bis 6, dadurch gekennzeichnet, daß der isolierte Raum, der zwischen den Überzugsschichten (2) verbleibt, wenn mehr als eine Überzugsschicht (2) zur Anwendung kommt, teilweise entlüftet oder mit Gas gefüllt ist, wie zum Beispiel mit Treibhausgas oder Edelgas.

8. Wärmeisolierung (1) nach einem beliebigen der Ansprüche 1 bis 7, dadurch gekennzeichnet, daß die Fasern als flockiges Einblasmaterial zwischen die Überzugsschichten (2) gebracht werden.

9. Wärmeisolierung (1) nach einem beliebigen der Ansprüche 1 bis 7, dadurch gekennzeichnet, daß die Fasern als Mattenbildungs- oder Wattierungsmaterial zwischen die Überzugsschichten (2) gebracht werden.

10. Verwendung einer Wärmeisolierung (1) nach einem beliebigen der vorhergehenden Ansprüche als sogenanntes Lichtdachmaterial.

11. Verwendung einer Wärmeisolierung (1) nach einem beliebigen der Ansprüche 1 bis 9 in lichtdurchlässigen Teilen eines Gewächshauses, eines Swimming-pools oder eines anderen Bauwerkes.

12. Verwendung einer Wärmeisolierung (1) nach einem beliebigen der Ansprüche 1 bis 9 als lichtdurchlässige Schallisolierung.

13. Verwendung einer Wärmeisolierung (1) nach einem beliebigen der Ansprüche 1 bis 9 in nahe an einem menschlichen oder tierischen Körper befindlichen Bauelementen.

14. Wärmeisolierte, lichtdurchlässige und andere Strahlung hindurchlassende Platte (1), umfassend mindestens eine Schicht (2) aus einem lichtdurchlässigen oder transparenten Material und eine wärmeisolierungsschicht (3) auf mindestens einer Seite der lichtdurchlässigen oder transparenten Schicht (2), dadurch gekennzeichnet, daß die Isolierungsschicht aus dünnen Fasern mit einem durch schnittlichen Durchmesser von weniger als 12 µm ausgebildet ist, so daß die Fasern grundsätzlich Licht- und Wärmestrahlung durch Reflexion an der Außenfläche der Fasern und nicht durch innere Reflexion in den Fasern streuen.

## Revendications

1. Un isolant thermique (1), fibreux, transmettant et réfléchissant de la lumière et/ou d'autres rayonnements, qui combine de bonnes propriétés d'isolation vis-à-vis du froid et du son, de bonnes propriétés de rétroréflexion de la chaleur, du rayonnement solaire et d'autres rayonnements, et qui présente une translucidité élevée vis-à-vis de la lumière, en transformant la lumière en forme de tache en une lumière blanche uniforme, comprenant une ou plusieurs couche(s) de revêtement (2) réalisée(s) en un matériau transparent ou translucide tel que du verre, une matière synthétique, un composite de matières synthétiques, ou une combinaison de ceux-ci et une couche isolante (3) fixée à la couche de revêtement ou insérée entre les couches de revêtement, caractérisé en ce que la couche isolante est constituée de fibres minces d'un diamètre moyen inférieur à 12 µm, de sorte que les fibres réalisent la diffusion de la lumière et le rayonnement thermique principalement par réflexion à la surface extérieure des fibres plutôt que par réflexion interne à l'intérieur des fibres.

2. Un isolant thermique (1) selon la revendication 1, caractérisé en ce que l'épaisseur moyenne des fibres est inférieure à environ 4 µm.

3. Un isolant thermique (1) selon la revendication 1 ou 2, caractérisé en ce que les fibres sont des fibres de verre, des fibres minérales ou des fibres de scories.

4. Un isolant thermique (1) selon la revendication 1 ou 2, caractérisé en ce que les fibres sont des fibres de polymère.

5. Un isolant thermique (1) selon l'une quelconque des revendications 1 à 4, caractérisé en ce que les fibres sont revêtues d'un matériau facilitant la réflexion de la lumière et du rayonnement thermique sur la surface des fibres.

6. Un isolant thermique (1) selon l'une quelconque des revendications 1 à 5, caractérisé en ce que la densité des fibres est inférieure à 50 kg/m³, et est de préférence d'approximativement 2 à 20 kg/m³.

7. Un isolant thermique (1) selon l'une quelconque des revendications 1 à 6, caractérisé en ce que l'espace isolé quand on utilise un nombre de couches de revêtement (2) supérieur à un, qui reste entre les couches de revêtement (2) est partiellement désaéré ou rempli d'un gaz, tel qu'un gaz de serre ou un gaz rare.

8. Un isolant thermique (1) selon l'une quelconque des reveadications 1 à 7, caractérisé en ce que les fibres sont introduites entre les couches de revêtement (2) sous la forme de matériau floculé appliqué par soufflage.

9. Un isolant thermique (1) selon l'une quelconque des revendications 1 à 7, caractérisé en ce que les fibres sont introduites entre les couches de revêtement (2) sous la forme d'un mat ou d'un rembourrage.

10. L'utilisation d'un isolant thermique (1) selon l'une quelconque des revendications précédentes, pour la réalisation de toitures appelées à effet lumineux.

11. L'utilisation d'un isolant thermique (1) selon l'une quelconque des revendications 1 à 9, pour des éléments translucides d'une serre, d'une piscine, ou d'un autre bâtiment.

12. L'utilisation d'un isolant thermique (1) selon l'une quelconque des revendications 1 à 9, en tant qu'isolant sonore translucide.

13. L'utilisation d'un isolant thermique (1) selon l'une quelconque des revendications 1 à 9, dans les éléments d'un bâtiment situés à proximité d'un corps humain ou animal.

14. Un panneau, isolé thermiquement et transmettant de la lumière et d'autres rayonements (1), comprenant au moins une couche (2) d'un matériau translucide ou transparent et une couche réalisant une isolation thermique (3) disposée d'au moins un côté de ladite couche translucide ou transparente (2), caractérisé en ce que la couche isolante est constituée à partir de fibres minces présentant un diamètre moyen inférieur à 12 µm de façon telle que les fibres réalisent la diffusion de la lumière et du rayonnement thermique, principalement par réflexion sur la surface extérieure des fibres plutôt que par réflexion interne à l'intérieur des fibres.
